# EUROPÄISCHE PATENTSCHRIFT

(11) **EP 2 787 226 B1**
(45) Veröffentlichungstag und Bekanntmachung des Hinweises auf die Patenterteilung: **09.12.2020**
(21) Anmeldenummer: 14002235.1
(22) Anmeldetag: 02.08.2007
(51) Int. Cl.: F16C 33/08, F16C 33/10, F16C 17/02, F16C 37/00, F16C 39/04, F16C 32/06

(54) **Hydrodynamisches Radialgleitlager für große Turbosätze**
Hydrodynamic journal bearing for large turbo-generators
Palier lisse radial hydrodynamique destiné à des turbo-générateurs de grande taille

(30) Priorität: 16.08.2006 EP 06017047
(43) Veröffentlichungstag der Anmeldung: 08.10.2014
(62) Teilanmeldung aus: 07788164.7
(73) Patentinhaber: Siemens Aktiengesellschaft, 80333 München (DE)
(72) Erfinder: Dettmar, Diethelm, 46485 Wesel (DE); Lüneburg, Bernd, 45481 Mülheim an der Ruhr (DE); Medhioub, Morched, 37120 Bovenden (DE)

(56) Entgegenhaltungen:
- DE-A1- 2 103 239
- DE-A1- 3 231 133
- DE-C- 556 052
- DE-U1- 7 729 292
- GB-A- 877 233
- US-A- 2 163 586

## Beschreibung

Die Erfindung betrifft ein Gleitlager, das einen Lagerkörper aufweist, in dem ein zu lagernder Körper gelagert wird, wobei der Lagerkörper von einem Stützkörper umfasst ist.

Ein Gleitlager ist ein Lager, bei dem der sich drehende und zu lagernde Körper auf Gleitflächen gleitet. Hierbei gleitet die Gleitfläche des zu lagernden Körpers auf den Gleitflächen des Lagerkörpers. Der Lagerkörper ist je nach Art des Gleitlagers unterschiedlich ausgestaltet. Bei einem Radialgleitlager ist der Lagerkörper als in einem Gehäuse eingebettete Lagerschale ausgeführt, die in mehrere Lagersegmente geteilt ausgeführt sein kann.

Bei Betrieb des Gleitlagers reibt die Gleitfläche des zu lagernden Körpers auf den Gleitflächen des Lagerkörpers. Um diese Reibung, und damit auch den Verschleiß des Gleitlagers, so gering wie möglich zu halten, wird zwischen die Gleitflächen ein Schmiermittelfilm, beispielsweise ein Ölfilm gebracht.

Bei Beginn der Rotation wird der Schmierstoff in den Spalt zwischen den Gleitflächen gezogen, und der zu lagernde Körper geht in eine exzentrische Position im Lagerkörper über. Er durchläuft dabei den Bereich der Mischreibung. Mit Erhöhung der Gleitgeschwindigkeit und des Übergangs in die exzentrische Position bildet sich zwischen zu lagerndem Körper und dem Lagerkörper ein Schmierstoffkeil, durch dessen Druck der zu lagernde Körper vom Lagerkörper abgehoben wird. Der zu lagernde Körper läuft dann stabil im Lagerkörper, bei rein hydrodynamischer Schmierung ohne direkten Kontakt von Lagerkörper und zu lagerndem Körper. Dieser Effekt tritt in einem Radialgleitlager durch ein vorhandenes Lagerspiel auf.

Ein Gleitlager, insbesondere ein Radialgleitlager der eingangs genannten Art ist beispielsweise in Dampfturbinen-, Generatoren- und Gasturbinenbau einsetzbar. Hierbei lagert das Gleitlager Rotorwellen als zu lagernde Körper.

Aus der DE 3 231 133 A1 geht ein Gleitlager hervor, das einem Lagerkörper umfasst, der aus zwei im wesentlichen halbzylindrischen Teilen besteht. Die beiden Lagerhälften sind in einem äußeren Gehäuse aufgenommen. In der belasteten Lagerschale sind zwei zur Welle hin geöffneten Nuten vorgesehen. Die Kanäle sind durch eine sich axial erstreckende Bohrung miteinander verbunden.

Die Zielsetzung aktueller Neuentwicklungen im Dampfturbinenbau für die Stromerzeugung besteht darin, den Wirkungsgrad deutlich zu steigern und die Energie effizient umzusetzen. Dabei ist eine hohe Betriebssicherheit zu gewährleisten und Kosteneinsparungen zu realisieren. Diese Entwicklung hat zur Folge, dass
a) die Rotoren länger werden, der Lagerabstand wird größer
b) die Abdampfquerschnitte insbesondere im Niederdruckbereich größer werden, und
c) die spezifische Leistung der einzelnen Teilturbinen angehoben wird.

Bei gleichzeitiger Beibehaltung eines so genannten Monoblockbauprinzips insbesondere im Niederdruckbereich von Dampfturbinen führt diese Entwicklung letztendlich zu einer signifikanten Erhöhung der spezifischen Lagerlasten. Damit werden die Lager bzw. deren maximale Tragfähigkeit begrenzend bei der Turbinenentwicklung insbesondere im Niederdruckbereich. Eine ähnliche Entwicklung ist auch bei den Generatoren und den Gasturbinen zu beobachten. Die Tragfähigkeit der Gleitlager ist von der Maximaltemperatur, der maximalen spezifischen Lagerbelastung und der minimalen Schmierfilmdicke begrenzt.

Neben der signifikanten Erhöhung der Tragfähigkeit werden folgende zusätzliche Anforderungen an dieses Lager gestellt:
- hohe Stabilität für alle Lastbereiche bzw. gute rotordynamische Eigenschaften,
- Servicefreundlichkeit,
- höchste Betriebsverfügbarkeit/verschleißfreier Betrieb,
- Anhebung der Rotoren durch Hochdrucköl im Turnbetrieb,
- hohe Störfallsicherheit (Integrität des Turbosatzes bei hohen Unwuchten),
- Verwendung im existierenden Lagergehäuse, und
- Nachrüstbarkeit.

Um den vorgenannten Anforderungen und einer signifikanten Erhöhung der Tragfähigkeit der Gleitlager zu entsprechen, sind z. B. folgende Maßnahmen bekannt:
- Reduzierung des Rotorgewichtes,
- Verwendung höherviskoser Öle,
- größere Lagerbreiten und/oder Lagerzapfendurchmesser,
- niedrigere Ölzuführtemperatur, und
- gerichtete (gelenkte) Schmierung (bei Kippsegmentlagern) .

Diese Standardmaßnahmen zur Erhöhung der Tragfähigkeit haben sich in der Praxis bewährt, stoßen aber immer häufiger an Grenzen.

Von daher liegt der Erfindung die Aufgabe zugrunde, ein Gleitlager der eingangs genannten Art dahingehend zu verbessern, dass dieses den oben genannten Anforderungen beispielsweise im Großturbinenbau, vorzugsweise im Dampfturbinenbau gerecht wird.

Erfindungsgemäß wird die Aufgabe durch ein Gleitlager gemäß Anspruch 1 gelöst.

Erfindungsgemäß ist vorgesehen, dass der Lagerkörper in seiner Wandung in Umfangsrichtung gesehen einen zumindest abschnittsweise angeordneten ersten Kanal aufweist, wobei in der Wandung zumindest eine Axialbohrung angeordnet ist, die den ersten Kanal durchdringt. Damit wird eine aktive Kühlung des Gleitlagers bzw. des Lagerkörpers zur Verfügung gestellt.

Zweckmäßig im Sinne der Erfindung ist hierbei, wenn der Lagerkörper in Axialrichtung gesehen zumindest einen zum ersten Kanal beabstandeten zweiten Kanal aufweist, wobei in der Wandung zumindest eine Axialbohrung angeordnet ist, die den ersten Kanal und zweiten Kanal durchdringt, so dass diese über die Axialbohrung miteinander in Verbindung stehen. Natürlich kann aber auch vorgesehen sein, dass ein dritter oder weitere Kanäle vorgesehen sind, wobei der erste Kanal in Axialrichtung gesehen zwischen dem zweiten und dem dritten Kanal angeordnet ist, und wobei mehrere Axialbohrungen vorgesehen sind, die jeweils alle drei Kanäle durchdringen.

Erfindungsgemäß ist der Lagerkörper als Mehrflächenlager aus zwei Halbschalen gebildet und ist der erste Kanal in einer belasteten Lagerschale des Lagerkörpers eingebracht und zum Stützkörper hin geöffnet, wobei der erste Kanal in Umfangsrichtung gesehen halbkreisförmig in die Wandung des Lagerkörpers eingebracht ist, so dass quasi eine halbkreisförmige Nut gebildet ist, die sich etwas in die Wandung einer unbelasteten Lagerschale, also der zweiten Halbschale hinein erstreckt.

Vorteilhafterweise weist der erste Kanal an seinen in Umfangsrichtung gesehen gegenüberliegenden Enden Lagertaschen auf, in denen jeweils zumindest ein Einspritzelement zum Einspritzen flüssigen Schmiermittels, vorzugsweise von Schmieröl zum zu lagernden Körper bzw. zur Rotorwelle angeordnet sind.

Vorteilhaft ist der erste Kanal in der belasteten Halbschale angeordnet und erstreckt sich zumindest einseitig etwas in die unbelastete Halbschale hinein wobei eine Teilfuge des Mehrflächenlagers bezogen auf eine Horizontale winklig angeordnet ist, so dass eine der Lagertaschen im Querschnitt gesehen oberhalb der Horizontalen und die andere Lagertasche unterhalb der Horizontalen angeordnet ist. Die Lagertaschen sind hierbei aufgrund der Ausgestaltung zumindest des ersten Kanals einerseits in der belasteten Lagerschale und andererseits in der unbelasteten Lagerschale angeordnet. Die belastete Lagerschale im Sinne der Erfindung ist die Schale, welche die nominelle Last aufnimmt, während sich die Rolle der unbelasteten Lagerschale vorwiegend auf die Führung des zu lagernden Körpers in dem Lagerkörper beschränkt.

Insgesamt betrifft die Erfindung bevorzugt Radialgleitlager für rotierende Wellen mit hydrodynamischer Schmierung. Die Bohrungsform jedes Lagers lässt sich durch die horizontale Verschiebung zweier Halbschalen (zylindrisch oder profiliert) beschreiben. Als Horizontale wird dabei die Richtung der Lagerteilfuge bei geteilten Lagern bezeichnet. Das Lager ist lediglich für eine Drehrichtung geeignet und bietet damit den Vorteil, des langen, sehr schwach konvergenten Einzugspalts, was eine Verbreiterung des hydrodynamischen Druckaufbaus zur Folge hat.

Insgesamt wird somit ein verbessertes Gleitlager zur Verfügung gestellt, das eine einstellbare Einspritzschmierung (gelenkte Schmierung) für ein voll umschlossenes Gleitlager aufweist, wobei auf Kippsegmente nach dem Stand der Technik verzichtet werden kann. Hierbei wird frisches Öl bzw. das flüssige Schmiermittel durch eine einseitig angeordnete Bohrung durch den Stützkörper (allgemein Gehäuse) zugeführt und gelangt erst in einen halb umschlossenen Kanal der belasteten Halbschale und anschließend in die Einspritzelemente. Diese sind in den Lagertaschen bzw. in den in Umfangsrichtung gesehen Lagertaschen jeweils in Mehrzahl zweireihig angeordnet und spritzen die Ölmenge senkrecht auf den zu lagernden Körper bzw. auf die Rotorwelle und schräg in den Austrittsspalt der belasteten Halbschale. Dabei sind in einer der Lagertaschen nur die schräg gerichteten Düsen aktiv. Bevorzugterweise ist dies die Lagertasche, welche im fixierten Zustand des Lagerkörpers unterhalb der Horizontalen angeordnet ist. Alle Düsen werden eingeschraubt, wodurch eine Dosierung des Öldurchsatzes im Zulauf ermöglicht wird.

Mittels eines Tragspiegels wird ein Einlaufverschleiß bzw. ein unkontrollierter Verschleiß im Betrieb vorteilhaft verhindert. Ein in Breitenrichtung geschlossener Kanal (Innenringkanal) ist mittig angeordnet und erstreckt sich über den ganzen Umfang der unbelasteten Halbschale.

Mittels der bevorzugterweise drei vorgesehenen Kanäle, welche sich in Umfangsrichtung erstrecken und mittels mehrerer Axialbohrungen in der belasteten Halbschale wird eine aktive Kühlung des Lagers erreicht, wobei das durch die einseitig angeordnete Bohrung in dem Stützkörper zugeführte flüssige Schmiermittel zunächst in den ersten Kanal gelangt und durch die jeweils zu den anderen Kanälen geöffneten Axialbohrungen geleitet wird, so dass die belastete Halbschale aktiv gekühlt wird. Den Kanälen bzw. Axialbohrungen kommt demnach eine Doppelfunktion zu. Zum einen dienen diese zur aktiven Kühlung mit frischem Öl. Zum anderen dienen diese zur Versorgung der Einspritzelemente mit frischem Öl.

Das Gleitlager bzw. der Lagerkörper wird vorteilhaft gegen die Drehrichtung des zu lagernden Körpers bzw. der Rotorwelle in den Stützkörper gedreht und durch das Fixierelement bzw. den oder die Stifte in einer optimierten Winkelposition gehalten. Die Winkelposition bzw. die optimierte Winkelposition ist hierbei von Anwendungsfall zu Anwendungsfall unterschiedlich und kann entsprechend dem jeweiligen Anwendungsfall berechnet werden.

Damit wird ein Gleitlager zur Verfügung gestellt, welches bei höchster Tragfähigkeit auch bei hohen Umfangsgeschwindigkeiten eine hohe Stabilität im weiten Lastbereich bzw. sehr gute rotordynamische Eigenschaften aufweist. Zudem weist das erfindungsgemäße Gleitlager geringe Reibleistung bzw. Verluste auf und kennzeichnet sich durch Servicefreundlichkeit aufgrund der Schalenbauweise. Insbesondere die merkliche Reduzierung der Reibleistung wird durch den Innenringkanal in der unbelasteten Halbschale erreicht. Besonders vorteilhaft ist, dass das Gleitlager durch den modularen Aufbau bei den existierenden Lagergehäusen bei vorhandenen Einbaubedingungen eingesetzt werden kann, wobei eine sehr hohe Störfallsicherheit vorliegt. Das erfindungsgemäße Gleitlager ist in Dampfturbinen, Generatoren und/oder z.B. Gasturbinen einsetzbar.

Weitere vorteilhafte Ausgestaltungen sind in den Unteransprüchen und der folgenden Figurenbeschreibungen offenbart. Es zeigen:
- Fig. 1: ein Gleitlager in einem Querschnitt,
- Fig. 2: das Gleitlager aus Fig. 1 in einem Längsschnitt, und
- Fig. 3: eine Grafik, bei der die (gerechnete) maximale Schmierfilmtemperatur über der spezifischen Lagerlast aufgetragen ist.

In den unterschiedlichen Figuren sind gleiche Teile stets mit denselben Bezugszeichen versehen, so dass diese in der Regel auch nur einmal beschrieben werden.

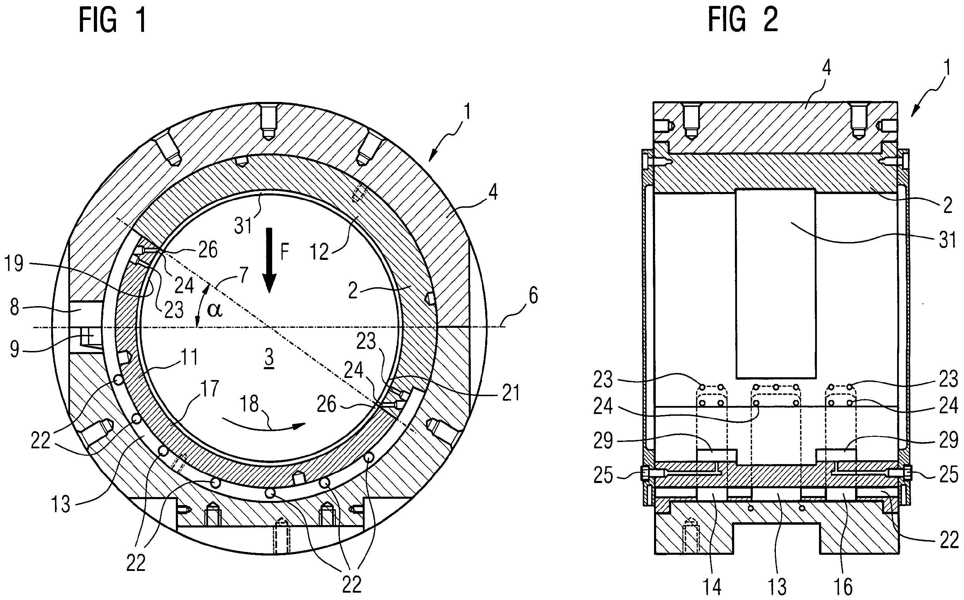

Figur 1 zeigt ein Gleitlager 1, das in dem dargestellten Ausführungsbeispiel als Radialgleitlager ausgeführt ist. Das Gleitlager 1 weist einen Lagerkörper 2 auf, in dem ein zu lagernder Körper 3, der im Folgenden als Rotorwelle 3 bezeichnet wird, gelagert ist. Der Lagerkörper 2 ist von einem Stützkörper 4 umgeben, der im Folgenden als Gehäuse 4 bezeichnet wird.

Das Gehäuse 4 weist eine Horizontale 6 auf, wobei als Horizontale 6 die Richtung der Lagerteilfuge bei geteilten Lagern bezeichnet wird.

Der Lagerkörper 2 ist als Mehrflächenlager mit seiner Teilfuge 7 bezogen auf die Horizontale 6 winklig angeordnet.

In dem Stützkörper 4 bzw. in dem Gehäuse 4 ist eine einseitig angeordnete Bohrung 8 eingebracht. Diese ist in dem in Figur 1 dargestellten Ausführungsbeispiel auf der linken Zeichnungsebene angeordnet, wobei die Bohrung 8 von der gedachten Horizontalen 6 halbiert wird.

In der Bohrung 8 ist ein Fixierelement 9 angeordnet, so dass der Lagerkörper 2 in seiner winkligen Position fixierbar ist. Das Fixierelement 9 ist beispielsweise als Stift ausgeführt, der in eine entsprechende Aufnahme des Lagerkörpers 2 eingreift, so dass dieser hinreichend drehsicher fixiert ist. Der Figur 2 sind zwei Hochdruckverschraubungen 25 entnehmbar, welche die Ölzuführung unter hohem Druck in hydrostatische Taschen 29 für die Anhebung der Rotorwelle ermöglichen.

Der Lagerkörper 2 ist erfindungsgemäß aus zwei Halbschalen 11, 12 zusammengesetzt, wobei die Lagerschale 11 im Folgenden als belastete Lagerschale 11 und die Lagerschale 12 im Folgenden als unbelastete Lagerschale 12 bezeichnet wird.

In der belasteten Lagerschale 11 sind drei Außenkanäle, 13, 14, 16 (Figur 2) angeordnet, die zum Gehäuse 4 hin geöffnet sind. Ein in Figur 2 dargestellter erster Kanal 13 ist in Axialrichtung gesehen jeweils zu dem benachbarten zweiten Kanal 14 und dritten Kanal 16 beabstandet, wobei der erste Kanal 13 zwischen dem zweiten und dem dritten Kanal 14 bzw. 16 angeordnet ist.

In Figur 1 ist aufgrund des gewählten Querschnittes lediglich der erste Kanal 13 dargestellt. Der erste Kanal 13 ist in der Wandung 17 der belasteten Lagerschale 11 eingebracht und erstreckt sich in Drehrichtung 18 des zu lagernden Körpers 3 bzw. der Rotorwelle 3 etwas über die Teilfuge 7 hinaus in die unbelastete Lagerschale 12.

An den in Umfangsrichtung gesehen gegenüberliegenden Enden des ersten Kanals 13 sind Lagertaschen 19 bzw. 21 angeordnet, wobei die Lagertasche 19 in der belasteten Lagerschale 11 und die Lagertasche 21 in der unbelasteten Lagerschale 12 angeordnet ist.

Der zweite Kanal 14 und der dritte Kanal 16 sind entsprechend zum ersten Kanal 13 ausgeführt.

Im Bereich des ersten Kanals 13 bzw. des zweiten und dritten Kanals 14 bzw. 16 sind in der Wandung 17 Längsbohrungen bzw. Axialbohrungen 22 eingebracht, welche die drei Kanäle 13, 14 und 16 durchdringen.

In den in Umfangsrichtung gesehen jeweils endseitig in den Kanälen 13, 14 bzw. 16 angeordneten Lagertaschen 19 bzw. 21 sind Einspritzelemente 23, 24 vorzugsweise Düsen, angeordnet, die in bevorzugter Ausgestaltung zum einen flüssiges Schmiermittel bzw. Schmieröl senkrecht (Einspritzelement 23) auf den zu lagernden Körper 3 bzw. auf die Rotorwelle 3 und zum anderen schräg (Einspritzelement 24) in einen Austrittsspalt 26 der belasteten Halbschale 11 bzw. der unbelasteten Halbschale 12 spritzen. Dabei sind nur die senkrecht gerichteten Einspritzelemente 23 bzw. Düsen in der Lagertasche 21 nicht aktiv.

Bei dem in Figur 1 dargestellten Ausführungsbeispiel ist der Lagerkörper 2 mit seiner Teilfuge 7 entgegen der Drehrichtung 18 aus der Horizontalen 6 verschoben. Somit ist der Lagerkörper 2 mit seiner Teilfuge 7 bezogen auf die Horizontale 6 winklig angeordnet, wobei ein Winkel α von Anwendungsfall zu Anwendungsfall einen unterschiedlichen Betrag aufweisen kann und zu jedem speziellen Anwendungsfall gesondert determinierbar bzw. berechenbar ist.

Durch die einseitig angeordnete Bohrung 8 in dem Stützkörper 4 bzw. in dem Gehäuse 4 wird frisches Schmiermittel bzw. Öl zugeführt und gelangt zunächst in den halbumschlossenen ersten Kanal 13 der belasteten Halbschale 11 und anschließend in die Einspritzelemente 23 bzw. 24. Diese sind in den Lagertaschen 19 bzw. 21 jeweils in Mehrzahl zweireihig angeordnet und spritzen die geforderte Ölmenge senkrecht auf die Rotorwelle 3 und schräg in den Austrittsspalt 26 der belasteten Halbschale 11. Alle Einspritzelemente 23, 24 bzw. Düsen werden bevorzugt in den Lagertaschen 19 bzw. 21 eingeschraubt, wodurch eine Dosierung des Öldurchsatzes im Zulauf möglich ist.

Etwa mittig ist in Figur 2 ein Innenringkanal 31 angeordnet, der in Breitenrichtung geschlossen ist, und sich über den ganzen Umfang der unbelasteten Halbschale 12 erstreckt.

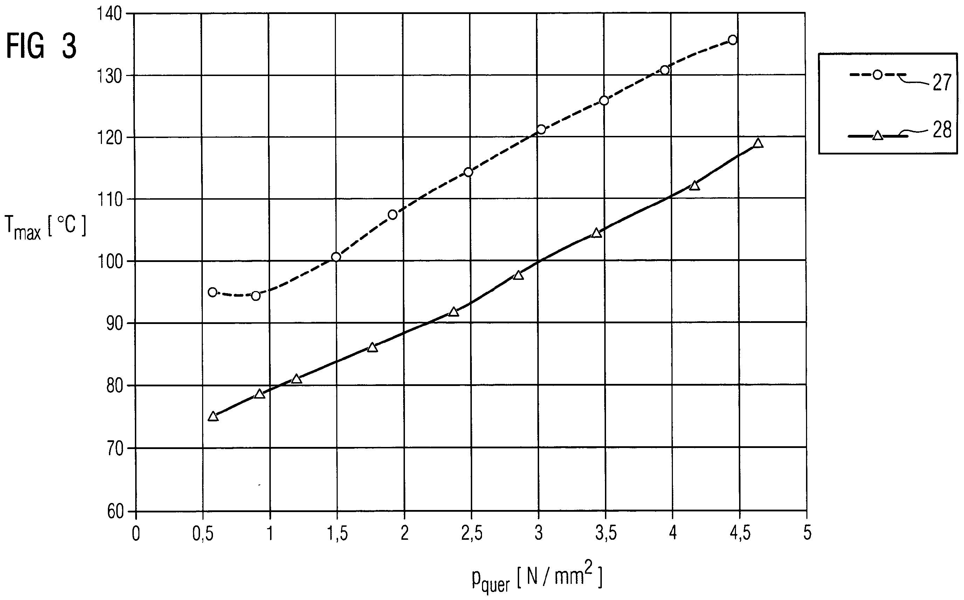

In Figur 3 ist beispielhaft die (gerechnete) maximale Schmierfilmtemperatur (Tₘₐₓ[°C]) über die spezifische Lagerlast (p_{quer} [N/mm²]) gezeigt. Hierbei ist eine Temperatur/Last Kennlinie eines konventionellen Gleitlagers (Bezugszeichen 27) im Vergleich zu einer Temperatur/Last Linie (Bezugszeichen 28) des erfindungsgemäß ausgeführten Gleitlagers, bzw. Radialgleitlagers mit hydrodynamischer Schmierung dargestellt. Deutlich entnehmbar ist der Grafik aus Figur 3, dass das erfindungsgemäße Gleitlager bei gleicher Last erheblich niedrigeren Temperaturen ausgesetzt ist.

## Patentansprüche

1. Gleitlager,
das einen Lagerkörper (2) aufweist,
in dem ein zu lagernder Körper (3) gelagert ist,
wobei der Lagerkörper (2) von einem Stützkörper (4) umfasst ist,
wobei der Lagerkörper (2) in seiner Wandung (17) in Umfangsrichtung gesehen einen zumindest abschnittsweise angeordneten ersten Kanal (13) aufweist,
wobei in der Wandung (17) zumindest eine Axialbohrung (22) angeordnet ist, die den ersten Kanal (13) durchdringt, wobei der Lagerkörper (2) als Mehrflächenlager aus zwei Halbschalen (11, 12) gebildet ist,
wobei der erste Kanal (13) in einer belasteten Lagerschale (11) des Lagerkörpers (2) eingebracht ist und zum Stützkörper (4) hin geöffnet ist,
wobei der erste Kanal (13) in Umfangsrichtung gesehen halbkreisförmig in der Wandung (17) eingebracht ist, so dass quasi eine halbkreisförmige Nut gebildet ist, die sich etwas in eine unbelastete Lagerschale (12) erstreckt.

2. Gleitlager nach Anspruch 1,
**dadurch gekennzeichnet, dass**
der Lagerkörper (2) in Axialrichtung gesehen zumindest einen zum ersten Kanal (13) beabstandeten zweiten Kanal (14) aufweist,
wobei in der Wandung (17) zumindest eine Axialbohrung (22) angeordnet ist, die den ersten und zweiten Kanal (13, 14) durchdringt.

3. Gleitlager nach einem der Ansprüche 1 bis 2,
**dadurch gekennzeichnet, dass**
der erste Kanal (13) an seiner in Umfangsrichtung gesehen gegenüberliegenden Enden Lagertaschen (19, 21) aufweist, in denen zumindest ein Einspritzelement (23, 24) zum Einspritzen flüssiger Schmiermittels zum zu lagernden Körper (3) angeordnet ist.

4. Gleitlager nach einem der Ansprüche 1 bis 3,
**dadurch gekennzeichnet, dass**
der erste Kanal (13) in der belasteten Halbschale (11) angeordnet ist, und
wobei eine Teilfuge (7) bezogen auf eine Horizontale (6) winklig angeordnet ist, so dass eine der Lagertaschen (19) im Querschnitt gesehen oberhalb der Horizontalen (6) und die andere Lagertasche (21) unterhalb der Horizontalen (6) angeordnet ist.

## Claims

1. Plain bearing,
which has a bearing body (2)
in which a body (3) to be borne is borne,
wherein the bearing body (2) is surrounded by a supporting body (4),
wherein the bearing body (2) has a first channel (13), which is arranged at least in places, in its wall (17), seen in the circumferential direction,
wherein at least one axial hole (22) is arranged in the wall (17) and passes through the first channel (13),
wherein the bearing body (2) is formed as a multiple-surface bearing from two half-shells (11, 12),
wherein the first channel (13) is incorporated in a loaded bearing shell (11) of the bearing body (2) and is open toward the supporting body (4),
wherein the first channel (13) is incorporated in a semicircular shape in the wall (17), seen in the circumferential direction, such that a semicircular groove is effectively formed which extends somewhat into an unloaded bearing shell (12).

2. Plain bearing according to Claim 1,
**characterized in that**
the bearing body (2) has at least one second channel (14) which is at a distance from the first channel (13), seen in the axial direction,
wherein at least one axial hole (22) is arranged in the wall (17) and passes through the first and the second channel (13, 14) .

3. Plain bearing according to either of Claims 1 and 2,
**characterized in that**
the first channel (13) has bearing pockets (19, 21) at its opposite ends, seen in the circumferential direction, in which at least one injection element (23, 24) is arranged for injection of liquid lubricant to the body (3) to be borne.

4. Plain bearing according to one of Claims 1 to 3,
**characterized in that**
the first channel (13) is arranged in the loaded half-shell (11), and
wherein a separating joint (7) is arranged at an angle with respect to a horizontal (6), such that one of the bearing pockets (19) is arranged above the horizontal (6), and the other bearing pocket (21) is arranged below the horizontal (6), seen in cross section.

## Revendications

1. Palier lisse,
qui a un corps (2) de palier,
dans lequel est logé un corps (3) à loger,
le corps (2) de palier étant entouré d'un corps (4) d'appui,
dans lequel
le corps (2) de palier a, dans sa paroi (17), considéré dans la direction du pourtour, un premier conduit (13) prévu au moins par endroits,
dans lequel il est disposé, dans la paroi (17), au moins un trou (22) axial, qui traverse le premier conduit (13), le corps (2) de palier étant constitué sous la forme d'un palier à plusieurs surfaces, composé de deux hémi-coquilles (11, 12),
dans lequel le premier conduit (13) est introduit dans une coquille (11) de palier chargée du corps (2) de palier et est ouvert vers le corps (4) d'appui,
dans lequel le premier conduit (13) est, considéré dans la direction du pourtour, introduit hémi-circulairement dans la paroi (17), de manière à former une rainure en forme de demi-cercle, qui s'étend un peu dans une coquille (12) de palier non chargée.

2. Palier lisse suivant la revendication 1,
**caractérisé en ce que**
le corps (2) de palier a, considéré dans la direction axiale, au moins un deuxième conduit (14) à distance du premier conduit (13),
dans lequel, dans la paroi (17), est ménagé au moins un trou (22) axial, qui traverse le premier et le deuxième conduits (13, 14).

3. Palier lisse suivant l'une des revendications 1 à 2,
**caractérisé en ce que**
le premier conduit (13) a, sur ses extrémités opposées, considéré dans la direction du pourtour, des poches (19, 21) de palier, dans lesquelles au moins un élément (23, 24) d'injection est monté pour l'injection de lubrifiant liquide dans le corps (3) à loger.

4. Palier lisse suivant l'une des revendications 1 à 3,
**caractérisé en ce que**
le premier conduit (13) est disposé dans l'hémi-coquille (11) chargée, et
un joint (7) partiel est disposé en faisant un angle rapporté à une horizontale (6), de manière à ce que l'une des poches (19) de palier, considéré en section transversale, soit disposée au-dessus de l'horizontale (6) et l'autre poche (21) de palier en dessous de l'horizontale (6).
